# FASCICULE DE BREVET EUROPEEN

(11) **EP 1 831 124 B1**
(45) Date de publication et mention de la délivrance du brevet: **13.04.2011**
(21) Numéro de dépôt: 05819006.7
(22) Date de dépôt: 30.11.2005
(51) Int. Cl.: C03C 17/30, C03C 17/00, C09K 3/10, E04B 1/68

(54) **SUBSTRAT PROTEGE CONTRE LES POLLUTIONS ORGANIQUES**
SUBSTRAT, DAS GEGEN ORGANISCHE VERSCHMUTZUNG GESCHÜTZT IST
SUBSTRATE WHICH IS PROTECTED AGAINST ORGANIC POLLUTION

(30) Priorité: 02.12.2004 FR 0452845
(43) Date de publication de la demande: 12.09.2007
(73) Titulaire: SAINT-GOBAIN GLASS FRANCE, 92400 Courbevoie (FR)
(72) Inventeur: GARREC, Ronan, 92600 Asnières sur Seine (FR); MESSERE, Rino, B-4577 MODAVE (BE)
(74) Mandataire: Teyssedre, Laurent
(86) Numéro de dépôt international: PCT/FR2005/051016
(87) Numéro de publication internationale: WO 2006/059042

(56) Documents cités:
- EP-A- 1 553 150
- EP-B- 0 850 204
- FR-A- 2 294 314
- FR-A- 2 552 153
- PATENT ABSTRACTS OF JAPAN vol. 1997, no. 03, 31 mars 1997 (1997-03-31) -& JP 08 302856 A (YKK KK; YKK ARCHITECT PROD KK), 19 novembre 1996 (1996-11-19)

## Description

La présente invention concerne un substrat dont la surface est protégée contre les pollutions organiques provenant de joints périphériques, en particulier des mastics comprenant des matériaux du type silicones.

Le substrat consiste en un métal, un alliage métallique, une céramique, un verre, oxyde ou matériau essentiellement minéral, notamment, dans ces deux derniers cas, sous forme de revêtements en couches minces sur un substrat en particulier vitreux. L'invention revêt un intérêt particulier quand le substrat est transparent et requiert une qualité optique élevée, qu'il s'agisse d'un substrat en verre, ou en verre muni d'une ou plusieurs couches de revêtement fonctionnelles, en particulier lorsque ces couches fonctionnelles confèrent un caractère hydrophile audit substrat.

On rencontre dans de nombreux domaines techniques des assemblages et juxtapositions de divers matériaux, de divers composants soit traditionnels (béton, briques, poutres d'acier ou de béton, verre...) soit modernes, préfabriqués ou synthétiques (portes, fenêtres, panneaux, plastiques...) et il est nécessaire de prévoir des interstices ou joints entre ces matériaux et composants différents, car ils présentent des variations dimensionnelles différentes en fonction des variations de température ou d'humidité et aussi des mouvements différents sous l'effet du vent, des fixations, du poids de l'ouvrage, du fluage de certains composants. Le mot « joint » désigne donc soit la ligne séparative et le garnissage ou calfeutrement d'un interstice entre deux éléments quelconques de même nature ou de nature différente, soit une solution de continuité voulue, c'est-à-dire une rupture rectiligne ménagée dans un ouvrage pour absorber des différences de mouvement ou de comportement.

Ces joints doivent ensuite être comblés avec des produits de calfeutrement, et le joint désigne alors aussi l'ensemble de l'interstice et du produit de calfeutrement utilisé pour l'obturer. Parmi les produits de calfeutrement, on définit comme mastic, au sens de la présente invention, un matériau pâteux, malléable, plastique ou élastique, appliqué dans un joint et constituant un calfeutrement en adhérant aux surfaces à l'intérieur de ce joint.

Un grand nombre de mastics de calfeutrement et d'étanchéité contiennent des composants du type silicone (également appelés polysiloxanes). Les mastics silicones se caractérisent par leurs propriétés élastiques, de durabilité et d'adhésion sur de nombreux substrats et sont ainsi très fréquemment utilisés pour assurer l'étanchéité des vitrages sur tous supports, ainsi qu'entre éléments sanitaires et murs. Les silicones entrent également dans la composition de nombreux autres mastics comme plastifiants (pour conférer une plasticité, voire une élasticité à la matière). En outre, l'ajout d'huiles de silicones (silicones de faible poids moléculaire) sur la surface des mastics facilite leur mise en oeuvre. Ainsi, les mastics contenant des composants du type silicones sont-ils nombreux et variés.

Il est apparu que les composés du type silicone contiennent toujours en plus ou moins forte proportion des polysiloxanes de faible poids moléculaire (parfois appelés « huiles de silicones ») qui ont la propriété de migrer vers la surface des mastics puis sur la surface des matériaux, rendant ladite surface polluée par les silicones très difficile à nettoyer. Cette propriété vient de ce que les silicones présentent une énergie de surface parmi les plus faibles connues et peuvent donc mouiller très facilement tout type de surface, en particulier les surfaces de haute énergie.

Ce problème apparaît de manière particulièrement cruciale lorsque la surface présente un caractère hydrophile, car les surfaces siliconées sont extrêmement hydrophobes. Lors d'un contact avec l'eau, la zone polluée devient extrêmement visible par contraste avec la zone non-polluée, puisque l'eau mouille parfaitement les surfaces hydrophiles, créant un film d'eau, tandis que les surfaces hydrophobes ne sont pas mouillées par l'eau, cette dernière stagnant sous forme de gouttelettes.

Les surfaces hydrophiles peuvent être liées à l'état de surface du substrat. Une surface de verre ou de métal propre, par exemple, présente une énergie de surface élevée et donc un caractère hydrophile, se manifestant par un angle de contact à l'eau inférieur à 15°. L'hydrophilie de surface peut également être due à des revêtements spécialement adaptés pour conférer cette propriété. Sur des substrats tels que les céramiques ou le verre, des revêtements comprenant de l'oxyde de titane au moins partiellement cristallisé, notamment sous forme anatase, confèrent audit substrat des propriétés de « super-hydrophilie » caractérisée par un angle de contact à l'eau de moins de 5°, voire même inférieure à 1°. De tels revêtements, qui présentent en outre des propriétés de photocatalyse, sont par exemple décrits dans la demande EP-A-0 850 204. D'autres types de revêtements présentant un caractère hydrophile sont également connus. On citera par exemple des revêtements à base de SiO₂ et/ou SiOC, en particulier lorsqu'ils comportent une texturation à motifs de dimensions de l'ordre de 10 à 200 nm, notamment sous forme de nodules.

Il est connu de la demande JP 8 302 856 un substrat verrier revêtu d'une couche d'oxyde de titane photocatalytique et comportant en périphérie un mastic contenant des silicones.

L'invention a pour but de protéger la surface d'un substrat des pollutions provenant des mastics comprenant des composants du type silicone.

A cet effet, l'invention a pour objet un substrat à base verrière ou céramique possédant sur au moins une partie d'une de ses faces au moins une couche mince qui est un revêtement conférant un caractère hydrophile prononcé tel qu'un revêtement comprenant de l'oxyde de titane au moins partiellement cristallisé, notamment sous forme anatase, ledit substrat comportant sur au moins une partie de sa périphérie un mastic comprenant des composants du type silicones, caractérisé en ce qu'est en outre disposée sur la surface de ladite couche mince une barrière à la migration des silicones.

Le revêtement est notamment un revêtement comprenant de l'oxyde de titane au moins partiellement cristallisé, notamment sous forme anatase, selon l'enseignement de la demande EP-A-0 850 204 susmentionnée. Un tel substrat revêtu présente des propriétés photocatalytiques et super-hydrophiles le rendant apte à s'auto-nettoyer grâce à l'élimination des salissures organiques et minérales sous l'effet conjoint d'un ruissellement d'eau, notamment de pluie, et d'un rayonnement visible et/ou ultraviolet tel que le rayonnement solaire. Dans ce dernier cas, la pollution à base de silicones est en effet à même de constituer un poison pour l'activité auto-nettoyante du revêtement.

Dans le cadre de la présente invention, on entend par « barrière » tout moyen permettant de limiter, voire de supprimer, la migration des silicones.

Selon un premier mode de réalisation de l'invention, la barrière à la migration des silicones est à base de mastic élastomère ne comprenant pas de plastifiants à base de silicone.

Le polymère faisant office de barrière est de préférence déposé sous forme de cordon sur la surface du substrat à protéger, soit en contact direct avec le mastic comprenant des composés du type silicone, soit en regard et à une distance de quelques millimètres dudit mastic. Cette deuxième option est celle qui présente les avantages les plus grands.

Le mastic élastomère faisant office de barrière à la migration des silicones est de préférence à base de MS polymère. Les MS polymères sont des polyéthers terminés par des groupements sylile. Un exemple non limitatif d'un tel MS polymère est le polymère constitué par une chaîne de polyoxypropylène terminée par des groupes diméthoxysilyle. Du fait de l'absence de segments cohésifs dans leur chaîne principale, ces polymères présentent une grande souplesse et ne nécessitent souvent pas l'ajout de plastifiants (et donc pas de plastifiants à base de silicones), voire même de solvants.

Il est apparu que, de manière surprenante et pour l'instant inexpliquée, de telles barrières protégeaient efficacement la surface du substrat. Les huiles silicones ayant la capacité de mouiller tout type de matériau, il n'était pas imaginé qu'une telle barrière, de quelque nature qu'elle soit, pût présenter une réelle efficacité. Sans vouloir être lié par une quelconque théorie scientifique, l'origine de l'efficacité très forte des polymères de la famille des MS polymères pourrait provenir d'interaction fortes entre les huiles silicones et les terminaisons silyle du MS polymère.

La barrière peut également être constituée d'une couche épaisse, dont l'épaisseur est préférentiellement comprise entre 100nm et 2 micromètres, comprenant de l'oxyde de titane au moins partiellement cristallisé, et même de préférence presque totalement cristallisé sous forme anatase. Cette couche présente de préférence une grande surface spécifique : il peut s'agir par exemple d'une couche de silice déposée par un procédé de type sol-gel à la périphérie de la surface à protéger, ladite couche de silice comportant des particules d'oxyde de titane, comme décrit par exemple dans la demande WO-A-03/087002. L'efficacité d'une telle barrière réside probablement dans sa très forte activité photocatalytique, de telles couches étant capables de dégrader sous rayonnement visible ou ultraviolet les molécules de silicone, la cinétique de dégradation intervenant plus rapidement que la cinétique de migration desdites molécules.

Selon un second mode de réalisation, la barrière à la migration des silicones peut être constituée par une entaille ou une rayure située sur la surface du substrat et en regard du mastic source de silicones. La rayure ou entaille est avantageusement d'une profondeur allant de 10 à 200 micromètres et d'une largeur allant de 100 micromètres à 2 millimètres.

Il semble que la rayure agisse comme un piège pour les huiles de silicone. Les dimensions de la rayure sont adaptées en fonction de la quantité de silicone pouvant migrer, et en tenant compte d'un éventuel effet fragilisant lorsque le substrat est en matériau fragile tel que le verre ou une céramique.

Un troisième mode de réalisation de l'invention consiste à marger ladite couche mince, c'est-à-dire à ôter la couche mince en périphérie dudit substrat par des procédés mécaniques et/ou chimiques. La barrière à la migration des silicones est ainsi constituée par un margeage périphérique de la couche mince. Il s'est en effet avéré que, en particulier lorsque la couche mince est à base d'oxyde de titane, les silicones migraient plus difficilement sur la surface de verre que sur la surface de la couche. Une interaction plus forte entre les atomes de silicium des silicones et de la surface du verre est peut-être à l'origine d'un tel phénomène. Pour constituer une barrière efficace, il est essentiel que le margeage soit tel qu'il existe une zone margée qui ne soit pas recouverte par le mastic, la largeur de ladite zone non recouverte étant avantageusement supérieure ou égale à 0,5 cm, voire 1 ou 2 cm. Il est connu de ne marger que la zone recouverte par le mastic afin d'éviter une dégradation du mastic par la couche mince lorsque cette dernière présente une activité photocatalytique, mais cela n'empêche pas les silicones du mastic de migrer en surface de la couche mince. Un tel margeage périphérique peut s'accompagner de la création d'un bord biseauté, également appelé chanfrein.

La présente invention sera mieux comprise à la lecture de la description détaillée ci-après d'exemples de réalisation non limitatifs et des figures ci-jointes :
- La figure 1 illustre une vue en perspective d'un substrat plan comportant sur une partie de sa périphérie un mastic comprenant des composants du type silicones;
- La figure 2 illustre une vue en coupe d'un substrat sur la surface duquel est disposée une barrière à la migration des silicones à base de polymère déposée au contact du mastic comprenant des composants du type silicones ;
- La figure 3 illustre une vue en coupe d'un substrat possédant sur une de ses faces une couche mince sur la surface de laquelle est disposée une barrière à la migration des silicones à base de polymère déposée à une distance de quelques millimètres du mastic comprenant des composants du type silicones ;
- La figure 4 illustre une vue en coupe d'un substrat possédant sur une de ses faces une couche mince ôtée en périphérie ;
- La figure 5 illustre une vue en coupe d'un substrat où la barrière à la migration des silicones est constituée par une entaille ;
- La figure 6 illustre une photographie de la surface du substrat représenté schématiquement en figure 5.

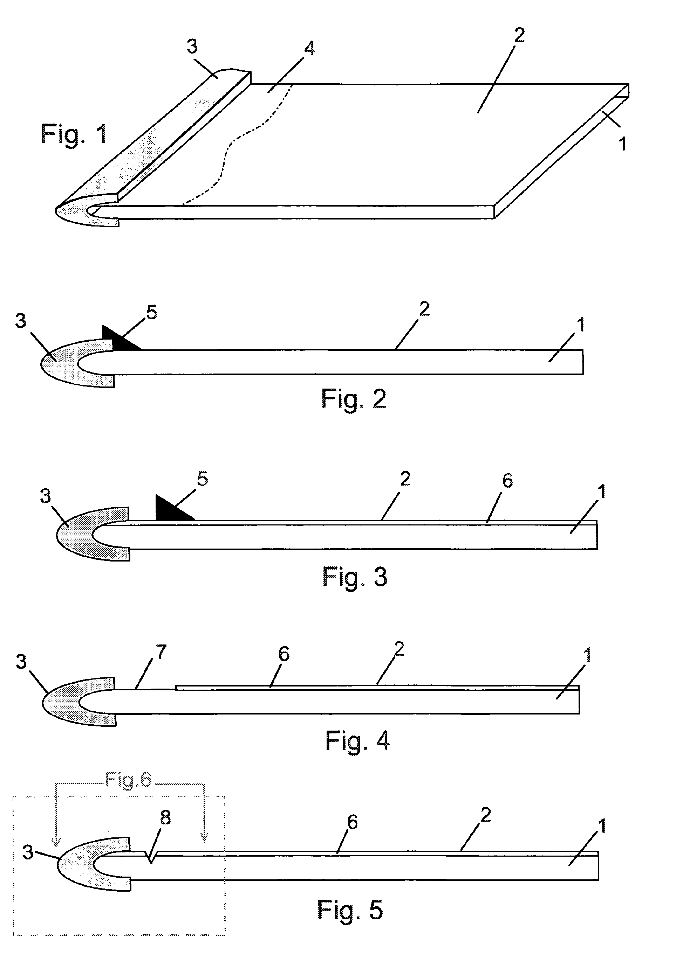

La figure 1 illustre une vue en perspective d'un substrat plan en verre silico-sodo-calcique 1 comportant sur une partie de sa périphérie un mastic 3 comprenant des composants du type silicones. Les huiles silicones migrent sur la surface 2 dudit substrat 1 et créent une surface polluée 4 extrêmement hydrophobe et difficile à nettoyer.

Le substrat 1 de la figure 2, ici représenté en coupe, garde au contraire une surface 2 propre grâce à l'emploi d'une barrière à la migration des silicones 5 à base de MS-polymère, plus particulièrement constitué par une chaîne de polyoxypropylène terminée par des groupes diméthoxysilyle. Le cordon de MS-polymère 5 est ici déposé en contact direct avec le mastic 3.

La figure 3 illustre un mode de réalisation différent, puisque le cordon de polymère 5 faisant office de barrière à la migration des silicones est déposé à environ 5 millimètres du mastic 3, configuration qui présente une efficacité encore plus forte. Dans le cas représenté sur la présente figure, le substrat 1 possède également sur une des ses faces une couche mince 6, la surface 2 dudit substrat 1 étant alors assimilée à la surface de ladite couche mince 6, puisque seule cette surface 2 est susceptible d'être polluée par les silicones. La couche mince 6 est ici un revêtement d'environ 15 à 20 nanomètres, à base d'oxyde de titane en grande partie cristallisé sous la forme cristallographique anatase déposé par une technique de pyrolyse à partir de précurseurs gazeux (CVD). Cette couche mince 6 confère à la surface 2 des propriétés photocatalytiques et un caractère hydrophile prononcé. Le substrat 1 étant dans ce cas précis en verre silico-sodo-calcique, cette couche mince est avantageusement disposée non directement sur le substrat 1 mais sur une sous-couche barrière à la migration des alcalins, non-représentée sur la figure.

Le même type de substrat est présenté en figure 4, mais dans ce mode de réalisation de l'invention la barrière à la migration des silicones est constituée par un margeage périphérique 7 de la couche mince 6. Ce margeage périphérique 7 a pour effet d'ôter la couche mince 6 sur la périphérie du substrat, créant ainsi une zone margée 7 exempte de couche mince 6 et non recouverte par le mastic 3.

La figure 5 présente un autre mode de réalisation selon l'invention, selon lequel la barrière à la migration des silicones est une entaille 8. La couche mince 6 est du même type que celle présentée en figure 3.

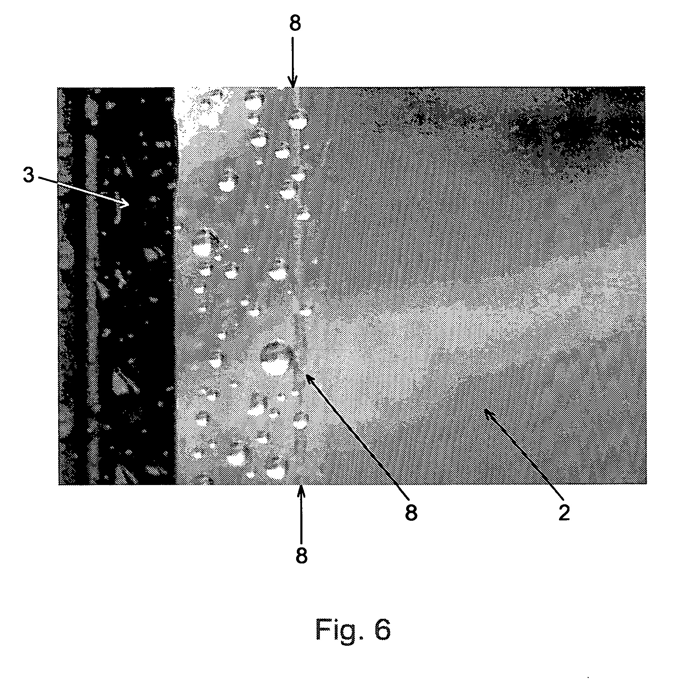

L'efficacité de ce dernier mode de réalisation est présentée sur la photographie de la figure 6 : le mastic 3 constitue la partie de couleur noire sur la gauche de la figure, la rayure 8 étant disposée verticalement environ au centre de la figure. Après aspersion d'eau, la partie de la surface 2 située à gauche de la rayure 8 présente un très fort caractère hydrophobe se manifestant par des angles de contact à l'eau élevés et témoignant de sa pollution par les huiles de silicone. Au contraire, la partie de la surface 2 située à droite de la rayure est parfaitement hydrophile, donc n'est pas polluée par les huiles de silicone.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Substrat (1) à base verrière ou céramique possédant sur au moins une partie d'une de ses faces au moins une couche mince (6) qui est un revêtement conférant un caractère hydrophile prononcé tel qu'un revêtement comprenant de l'oxyde de titane au moins partiellement cristallisé, notamment sous forme anatase, ledit substrat (1) comportant sur au moins une partie de sa périphérie un mastic (3) comprenant des composants du type silicones, **caractérisé en ce qu'**est en outre disposée sur la surface (2) de ladite couche mince (6) une barrière à la migration des silicones (5, 7, 8).

2. Substrat (1) selon la revendication 1, **caractérisé en ce que** la barrière à la migration des silicones (5) est à base de mastic élastomère ne comprenant pas de plastifiants à base de silicone.

3. Substrat (1) selon la revendication précédente, **caractérisé en ce que** le mastic élastomère (5) est à base de polyéther terminé par des groupements sylile.

4. Substrat (1) selon la revendication 2 ou 3, **caractérisé en ce que** le polymère faisant office de barrière (5) est déposé sous forme de cordon sur la surface (2) dudit substrat (1), en contact direct avec le mastic (3) comprenant des composés du type silicones.

5. Substrat (1) selon la revendication 2 ou 3, **caractérisé en ce que** le polymère faisant office de barrière (5) est déposé sous forme de cordon sur la surface (2) dudit substrat (1), en regard et à une distance de quelques millimètres dudit mastic (3).

6. Substrat (1) selon la revendication 1, **caractérisé en ce que** la barrière à la migration des silicones (8) est constituée par une entaille ou une rayure située sur la surface (2) dudit substrat (1) et en regard du mastic source de silicones (3).

7. Substrat (1) selon la revendication 1, **caractérisé en ce que** la couche mince (6) comprend de l'oxyde de titane au moins partiellement cristallisé, et **en ce que** la barrière à la migration des silicones (8) est constituée par un margeage périphérique (7) de ladite couche mince (6), ledit margeage étant tel qu'il existe une zone margée (7) non recouverte par le mastic (3).

## Claims

1. A substrate (1) based on glass or ceramic having, on at least one part of one of its faces, a thin film (6) which is a coating that imparts a pronounced hydrophilic character such as a coating comprising at least partially crystalline titanium oxide, especially in anatase form, said substrate (1) having, on at least one part of its periphery, a mastic (3) comprising silicone-type components, **characterized in that** a barrier to the migration of the silicones (5, 7, 8) is, in addition, placed on the surface (2) of said thin film (6).

2. The substrate (1) as claimed in claim 1, **characterized in that** the barrier to the migration of the silicones (5) is based on an elastomeric mastic that does not comprise any silicone-based plasticizers.

3. The substrate (1) as claimed in the preceding claim, **characterized in that** the elastomeric mastic (5) is based on a silyl-terminated polyether.

4. The substrate (1) as claimed in claim 2 or 3, **characterized in that** the polymer acting as a barrier (5) is deposited in the form of a bead on the surface (2) of said substrate (1), in direct contact with the mastic (3) comprising silicone-type compounds.

5. The substrate (1) as claimed in claim 2 or 3, **characterized in that** the polymer acting as a barrier (5) is deposited in the form of a bead onto the surface (2) of said substrate (1), opposite to and at a distance of a few millimeters from said mastic (3).

6. The substrate (1) as claimed in claim 1, **characterized in that** the barrier to the migration of the silicones (8) is formed from a notch or a groove located on the surface (2) of said substrate (1) and opposite to the mastic that is a source of silicones (3).

7. The substrate (1) as claimed in claim 1, **characterized in that** the thin film (6) comprises at least partially crystalline titanium oxide, and **in that** the barrier to the migration of the silicones (8) is formed from a peripheral margination (7) of said thin film (6), said margination being such that there is a marginated zone (7) that is not covered by the mastic (3).

## Patentansprüche

1. Substrat (1) auf Glas- oder Keramikbasis, das auf wenigstens einem Teil von einer seiner Seiten wenigstens eine dünne Schicht (6) aufweist, die eine Beschichtung ist, welche einen ausgeprägten hydrophilen Charakter verleiht, wie eine Beschichtung, die wenigstens teilweise kristallisiertes Titanoxid, insbesondere in Anatas-Form umfasst, wobei das Substrat (1) auf wenigstens einem Teil seines Umfangs einen Kitt (3) mit Komponenten vom Typ Silikone aufweist, **dadurch gekennzeichnet, dass** auf der Oberfläche (2) der dünnen Schicht (6) ferner eine Barriere gegen das Wandern der Silikone (5, 7, 8) angeordnet ist.

2. Substrat (1) nach Anspruch 1, **dadurch gekennzeichnet, dass** die Barriere gegen das Wandern der Silikone (5) auf der Basis eines Elastomerkitts ist, der keine silikonbasierten Weichmacher umfasst.

3. Substrat (1) nach dem vorstehenden Anspruch, **dadurch gekennzeichnet, dass** der Elastomerkitt (5) auf der Basis von Silylgruppen-terminiertem Polyether ist.

4. Substrat (1) nach Anspruch 2 oder 3, **dadurch gekennzeichnet, dass** das als Barriere (5) dienende Polymer in Strangform auf der Oberfläche (2) des Substrats (1), in direktem Kontakt mit dem Verbindungen vom Typ Silikone umfassenden Kitt (3) angeordnet ist.

5. Substrat (1) nach Anspruch 2 oder 3, **dadurch gekennzeichnet, dass** das als Barriere (5) dienende Polymer in Strangform auf der Oberfläche (2) des Substrats (1) gegenüber dem und in einem Abstand von einigen Millimetern von dem Kitt (3) angeordnet ist.

6. Substrat (1) nach Anspruch 1, **dadurch gekennzeichnet, dass** die Barriere gegen das Wandern der Silikone (8) von einer Kerbe oder einer Riefe gebildet ist, die sich an der Oberfläche (2) des Substrats (1) sowie gegenüber dem Silikone umfassenden Kitt (3) befindet.

7. Substrat (1) nach Anspruch 1, **dadurch gekennzeichnet, dass** die dünne Schicht (6) wenigstens teilweise kristallisiertes Titanoxid umfasst und dass die Barriere gegen ein Wandern der Silikone (8) von einer umfangseitigen Randentschichtung (7) der dünnen Schicht (6) gebildet ist, wobei die Randentschichtung derart ist, dass ein nicht mit dem Kitt (3) bedeckter randentschichteter Bereich (7) vorhanden ist.
